**Europäisches Patentamt**

**European Patent Office**

**Office européen des brevets**

(19)

(11) Publication number: **0 121 108**

**A1**

(12) # EUROPEAN PATENT APPLICATION

(21) Application number: **84102184.3**

(22) Date of filing: **01.03.84**

(51) Int. Cl.³: **F 16 B 25/00**

(30) Priority: **07.03.83 US 472662**

(43) Date of publication of application:
**10.10.84 Bulletin 84/41**

(84) Designated Contracting States:
**AT BE CH DE FR GB IT LI LU NL SE**

(71) Applicant: **Laverty, Richard C.**
**1637 Balmoral Lane**
**Palatine, III. 60067(US)**

(72) Inventor: **Laverty, Richard C.**
**1637 Balmoral Lane**
**Palatine, III. 60067(US)**

(74) Representative: **Kraus, Walter, Dr. et al,**
**Patentanwälte Kraus & Weisert Irmgardstrasse 15**
**D-8000 München 71(DE)**

(54) **Self-drilling and self-extruding screw.**

(57) An improved screw fastener that has thread construction formed completely by roll-forming, and which is capable of self-drilling and self-tapping into relatively heavy sheet metals. The screw is characterised by a first thread (13) that extends from the pointed tip (17) of the screw in a helical path over the surface of the tapered point of the screw, and by a second thread (14) lying within and parallel to said first thread and having a leading edge that commences at a point axially rearward from the pointed tip and rises at a more abrupt angle of elevation to an equal or preferably greater height than the first thread. The leading edge of the second thread serves as a cutting or drilling edge for enlarging an opening into a workpiece and permitting ready penetration into materials of relatively heavy gauge.

FIG. 2

SELF-DRILLING AND SELF-EXTRUDING SCREW FASTENER

This application is a Continuation-In-Part of my earlier filed application entitled: SELF-DRILLING AND SELF-EXTRUDING SCREW, Serial Number 443,339, filed November 22, 1982.

BACKGROUND OF THE INVENTION

1. FIELD OF THE INVENTION

This invention relates generally to Driven, Headed, and Screw-Threaded Fastenings, and more particularly to screws with roll-formed threads. Still more specifically, the screws herein are of the self-threading type capable of partially drilling and penetrating a workpiece to form their own opening and thereafter enlarging and threading that opening to make a firm engagement therewith. The types of screws described herein may be useful in the field of dry-wall construction, but even more useful in joining together two sheets of metal or other material.

2. DESCRIPTION OF THE PRIOR ART

There are currently available on the market multi-threaded screws of the self-extruding type, which are reasonably satisfactory in joining together sheets of relatively thin-gauge metal (e.g. 20 gauge). Such screws have been found to be deficient or to break down when used with heavier gauge metal such as 18 or 16 gauge. The problems associated with such screws and with the penetration of heavier gauge workpieces generally were addressed in my earlier patent no. 4,027,573.

Screw fasteners capable of penetrating and fastening heavy gauge metal are also commercially available and are exemplified by the screw shown in the patent to Skierski, no. 3,517,542. Such screw is in fact a composite construction of a drill bit formed with screw threads on its shank portion. This fastener completely drills an opening in a workpiece and relies on the screw threads for fastening. Screws of this type cannot be formed completely by roll-forming, are relatively slow to install, and are much more expensive than the screw fastener of the present invention.

Roll-formed, self-extruding fasteners purported to be capable of penetrating and fastening thin gauge metal are exemplified by the screws shown in the patents to Shimizu no. 4,241,638 and no. 4,329,099, and in the patent to Okada no. 4,323,326. The screws illustrated and described in the patents to Shimizu have two threads which extend from the shank part way down the tapered point. Shimizu also has a third thread in a position midway between the two screw threads, which begins at the pointed tip in a very steep lead angle which purportedly functions as a drilling portion. This third thread ends where the shank begins and the tapering portion ends. The juncture between the shank and tapered point is where greatest resistance is encountered in penetrating a workpiece. This third thread effectively causes binding as it approaches near the shank and inhibits rather than enhances such penetration. In one modification of the Shimizu screw, two threads are shown on the tapered point, one of which fades away on the tapered point near the juncture of the shank. A third thread begins near this region but does not follow in the groove made by fading thread. The fact that it does not follow in same groove causes binding at this location. The patent to Okada shows a self-drilling screw formed with one or more threads with
at least one cutting edge of a drill shape at the tip end.   In
practice, it is very difficult to fill out the threads at the tip
of the point by roll-forming.   In addition, the tip is the most
narrow and thus the weakest part of the screw.   If the threads
are too high at the tip, these threads are put under too much
stress in use, and the tip will break or the threads will wear out.

## SUMMARY OF THE INVENTION

It is a primary object of the present invention to provide an improved screw fastener construction, formed completely by a roll-forming process, and adapted to be self-drilling and self-tapping in heavy gauge sheet metals, e.g. sheet steel of 18 gauge and heavier. The screw fastener has one thread which extends uninterruptedly from the pointed tip in a helical path over the outer surface of the tapered point. This thread may extend continuously over the juncture of the tapered portion and the shank, or it may diminish in height relative to the tapered point so as to relieve resistance to penetration into a workpiece at this juncture, as described in my earlier patent no. 4,027,573. The second thread lies within and is parallel with said first thread and has a leading edge which commences at a location axially rearward from the tip. This second thread is characterize by a leading edge having a more abrupt rise and preferably greater height than said first thread. This leading edge serves as a cutting edge for drilling and enlarging the hole being formed in a workpiece. This thread may also diminish in height with respect to the tapered point, or increase in height at a decreasing rate as it approaches the juncture with the shank.

It is a more specific object to provide a screw construction of the type described in which the axial location of the starting point for the leading edge of the second thread may be varied slightly for specific types of metals to be joined. In other words, the screws may be specifically designed according to the principles of this invention for particular applications.

Other features and advantages of the invention will be apparent from the following description and claims and are illustrated in the accompanying drawings which show structure embodying preferred features of the present invention and the principles thereof.

## BRIEF DESCRIPTION OF THE DRAWINGS

FIG. 1 is a fragmentary side elevation view of a screw fastener constructed to exemplify the principles of the present invention;

FIG. 2 is an enlarged, fragmentary, phantom view of the tapered point of the screw of FIG. 1;

FIG. 3 is an enlarged, fragmentary, phantom view of the tapered point having two threads on the tapered point, but only one thread on the shank portion of the screw;

FIG. 4 is a schematic diagram of the tapered point of FIG. 2 showing the envelope of revolution of the screw;

FIG. 5 is a schematic diagram of the tapered point of FIG. 3 in which the drilling thread diminishes to zero height; and the single lead extends onto the shank portion of the screw;

FIG. 6 is a schematic diagram in which the drilling and tapping threads are of the same height on the tapered point and on the shank;

FIG. 7 is a schematic diagram of a modified construction in which the tapping thread is adapted to serve also as a drilling thread for a portion of its length; and

FIG. 8 is a schematic diagram of still another modification showing the cutting thread as originating near the tip with gradual reduction in thread height up the tapered point portion.

DETAILED DESCRIPTION OF THE DRAWINGS  **0121108**

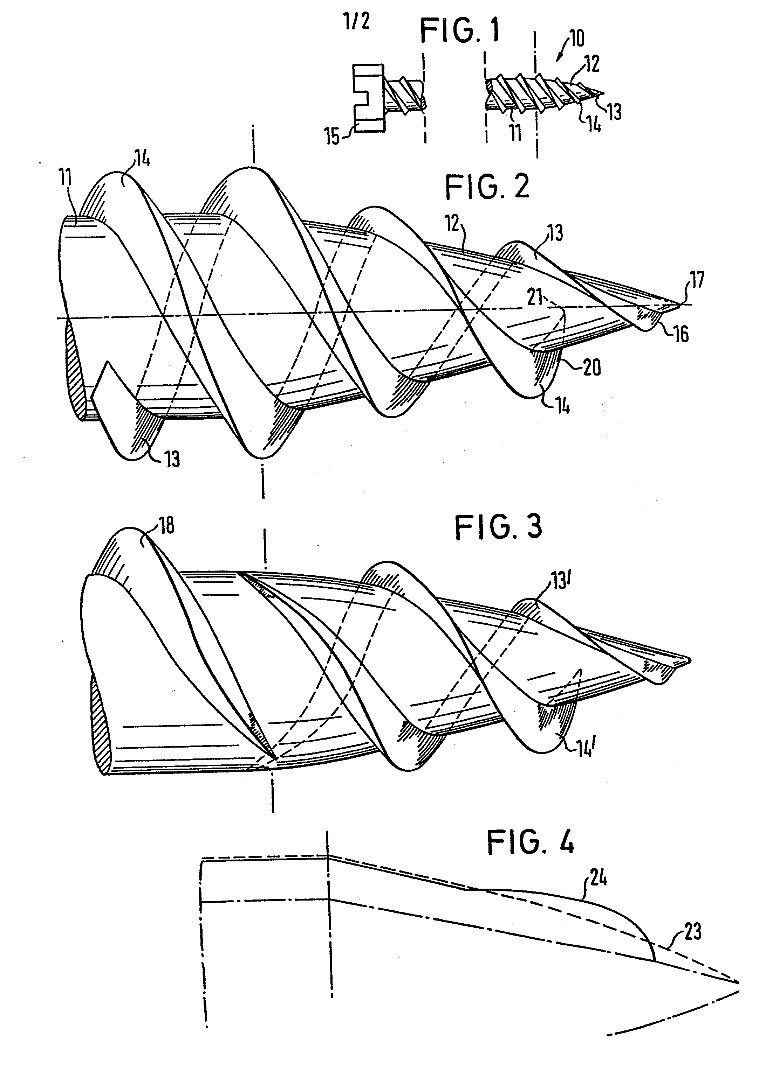

The improved screw fastener of the present invention is shown in fragmentary form in FIGS. 1 and 2 and is designated generally by the number 10. The screw 10 comprises: an elongated cylindrical shank portion 11, a tapered or generally conical point portion 12, a first raised screw thread 13, a second raised screw thread 14, and an integral head 15. The head 15 may be any desired conventional form, such as the slotted hex head shown, or other head adapted to receive a rotary driving tool. The first thread 13 may be regarded as a conventional tapping or self-extruding screw thread in most of the embodiments shown and described herein. The second thread 14 is identified as a drilling thread and differs substantially from conventional threads.

Roll-form screws generally are formed from soft steel wire that is cut to a desired length, the head is formed by compression of one end of the wire blank in a forming die, and the desired threads and point roll-formed on the exterior of the blank. The completely formed screw is then heat-treated to a suitable hardness, and then coated or plated as desired.

The roll-forming dies are generally in the shape of flat parallel plates having opposing faces onto which parallel angular grooves have been cut to define the desired thread pitch, spacing, and height. The depth of the groove cut defines the height of the thread on the finished screw. The forming dies are generally parallel except for raised portions which merge closely together to form the tapered point. The dies move parallel to each other in the forming process with a screw blank rolled between the opposing faces. The groove defining the thread angle conventionally has an included angle of perhaps 60 degrees. The groove defining the drilling thread 14 of the present invention may have a different included angle.

Referring now to FIG. 2, the principles of the invention are illustrated in greater detail. The first thread 13, or tapping thread, has a leading edge 16 which commences at a location immediately adjacent the tip 17 of the conical point 12. The thread 13 extends in a helical path around the outer surface of the point 12 and onto the shank 11. The drilling thread 14 has a leading or cutting edge 20 commencing at a location 21 which is axially rearward from the tip 17, or to the left as shown. The leading edge 20 is characterized by a more abrupt rise than the leading edge 16 of the thread 13. This abrupt rise, or angle of elevation of the thread 14, is obtained from the configuration of the forming dies. Normally, a grinding wheel having a diameter of approximately 2 3/4" is used to cut the groove defining the thread formation. To obtain the more abrupt rise, a grinding wheel of much smaller diameter, e.g. about 1", is utilized to initiate the cutting of the groove at the desired location. The consequent abrupt rise of the leading edge 20 enables the thread 14 to attain full height much faster and causes the leading edge 20 to contact a workpiece at a better angle for cutting. The abrupt rise in thread height may also be produced by modifying the grooves in the dies by means of an EDM process or by other means.

The drilling thread 14 may rise to a height equal to or preferably greater than the height of thread 13 at the same axial position. The height of thread 14 may also diminish with respect to the corresponding height of thread 13 thereafter as it approaches the juncture of the point 12 with the shank 11. This design feature should reduce resistance to penetration into a workpiece, as described in my earlier patent no. 4,027,573.

Referring now to FIG. 3, there is illustrated a modification to the construction of FIG. 2, wherein one or both of the threads 13' and 14' diminish in height with respect to the surface of the point 12 as these threads approach the juncture between the point 12 and shank 11, and only one thread 18 extends in a helical path along the outer surface of the shank 11. This thread 18 may have different pitch or thread spacing on the shank 11, from either of the threads 13' and 14'.

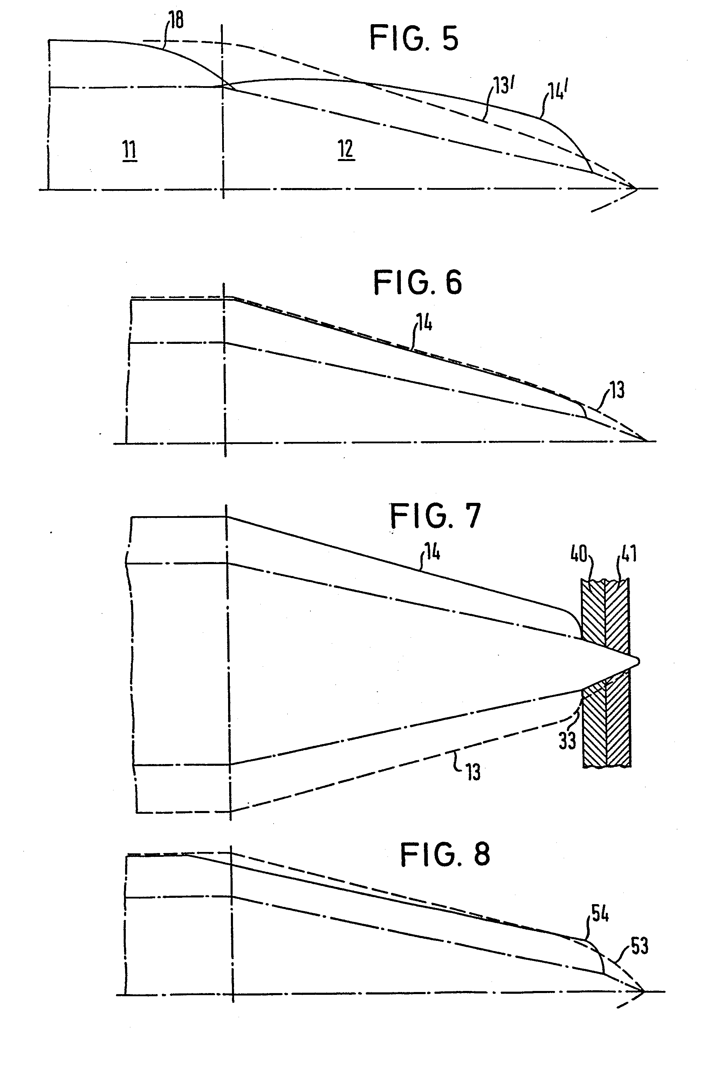

Referring now to FIG. 4, there is illustrated in schematic form the envelope of revolution of the screw 10 of FIG. 2. This figure shows the envelope 23 for the thread 13 in dotted line, and the envelope 24 for the thread 14 in solid line. This figure also shows the height of the thread 14 as rising above that of the thread 13. It should be understood, however, that the thread height of 14 need rise only to equal the height of thread 13, as shown in FIG. 6. The actual desired height of the thread 14 may be a design parameter to be determined by the intended use for the particular screw, i.e. for the types of sheet material to be penetrated or joined together.

Referring to FIG. 5, there is illustrated the envelope of revolution for the screw configuration shown in FIG. 3. This figure shows that both threads 13' and 14' diminish in height relative to the tapered point 12 and may fade away completely on the shank 11. There may be a slight overlap of the termination of threads 13' and 14' and the commencement of thread 18. This thread 18 may originate on the tapered point portion and extend onto the shank as a single thread of different pitch than the threads 13' and 14'. For example, the threads 13' and 14' may have a pitch of 7-15 threads per inch, double lead, and the thread 18 may have a pitch of 7-18 threads per inch, single lead on the shank 11. If the thread 13' is maintained with the same helix angle and height onto the shank 11, only thread 14' need diminish in height near the juncture. Since thread 14' commences and ends on the tapered point, this thread may also have a different pitch than thread 13' for certain applications. Since thread 14' is slightly higher than thread 13', this thread can in effect act as a reamer to enlarge the opening for thread 13', regardless of the actual pitch of thread 14'.

In the modification shown in FIG. 7, the tapping thread 13 is shown as being formed with an abrupt rise 33 which can serve as an additional cutting edge for a portion of the distance that may be required in penetrating a workpiece. In this embodiment, both threads drill together for some desired interval to augment penetration. This design is particularly useful in joining together two sheets of material, because the abrupt rise on both threads force the two sheets 40 and 41 closely together during penetration.

In the embodiment shown in FIG. 8, the tapping thread 53 is shown as commencing at the tip of the point, and the cutting thread 54 commencing at a location only slightly removed from the tip. The cutting thread 54 rises in height above the thread 53 and then diminishes in height below the thread 53 as both threads advance up the tapered point and onto the shank. This diminished height provides some relief to penetrating into a workpiece but still retains thread engagement during entry

In all of the embodiments shown and described above, the operational performance is common in that all provide what may be described as a three stage entry into a workpiece. In the first stage, the screw 10 penetrates in a conventional manner to a depth defined from the tip 17 to the leading edge 22 of thread 14. At this depth, the diameter of the opening being formed has increased significantly, and the resistance to further penetration has increased correspondingly. At this second stage, the leading edge 22 of thread 14 begins to serve as a drill or cutting edge for further enloarging and opening. After the cutting edge 22 has enlarged the opening, the screw 10 can advance into the third stage in a conventional manner, or with relief to further penetration by diminishing the relative height of one or both of the threads with respect to the surface of the point 12. In other words, the drill thread 14 enlarges the opening in the workpiece to the point where the screw becomes stronger than the workpiece. The threads 13 and/or 14 then engage the workpiece to pull up. This can be performed rapidly and ensure 100% thread engagement.

It has been found that screw fasteners constructed according to the principles of this invention are capable of penetrating and fastening 18 and 16 gauge steel with more than 90% reliability, and 14 gauge steel with more than 50% reliability. In addition, this screw can do so in a shorter time span than the composite drill-screws. No screw other than this one that has its threads made completely by a roll-forming process is known to perform with such capability.

The invention is not to be considered as limited to the embodiments shown and described, except insofar as the claims may be so limited.

I Claim:

1.    A self-drilling and self-tapping screw construction having an integral elongated shank portion formed with a driving head at one end and a tapered point portion at the other end and adapted to provide a staged penetration into a workpiece, the improved thread construction comprising:

a first thread commencing at the tip of said point portion and enxtending in a helical path over the surface of said point portion; and

a second thread lying within and parallel to said first thread and having a leading edge commencing at a location on said point portion axially rearward from said tip and characterized by a sharply rising angle of elevation with respect to the surface of said point portion.

2.    The screw construction of Claim 1 wherein said first thread increases in height from said tip up said point portion and extends uninterruptedly onto said shank portion; and

said second thread rises to a height greater than said first thread.

3.    The screw construction of Claim 1 wherein said first thread increases in height from said tip up said point portion and extends uninterruptedly onto said shank portion; and

said second thread rises to a height equal to the height of said first thread.

4.    The screw construction of Claim 2 wherein said second thread diminishes in height with respect to said first thread as said thread approaches the juncture of the point portion with said shank portion.

5. The screw construction of Claim 2 wherein said threads reach a parity in height on the tapered point portion.

6. The screw construction of Claim 2 wherein said threads reach a parity in height near the juncture of said point portion with said shank.

7. The screw construction of Claim 2 wherein said threads reach a parity in height on said shank.

8. A self-drilling and self-tapping screw construction having an integral elongate shank portion formed with a driving head at one end and a tapered point portion at the other end and adapted to provide a staged penetration into a workpiece, the improved thread construction comprising:

a first thread commencing at the tip of said point portion and extending in a helical path over the surface of said point portion; and

a second thread lying within and parallel to said first thread and characterized by said second thread rising to a greater height than said first thread on said tapered point portion.

9. The screw construction of Claim 1 wherein both of said threads diminish in height with respect to said tapered point to substantially zero height at the juncture with said shank.

10. The screw construction of Claim 9 wherein a third thread commences near said juncture and extends in a helical path along the surface of said shank.

11. The screw construction of Claim 10 wherein said third on said shank has a pitch different from that of either of said first and second threads.

12. The screw construction of Claim 9 wherein: said second thread has a height greater than and a pitch different from the pitch of said first thread.

1/2 **FIG. 1**

**FIG. 2**

**FIG. 3**

**FIG. 4**

# FIG. 5

18

13'

14'

11

12

# FIG. 6

14

13

# FIG. 7

14

40  41

33

13

# FIG. 8

54

53

European Patent
Office

**EUROPEAN SEARCH REPORT**

**0121108**
Application number

EP  84 10 2184

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-U-7 328 571  (RICHTER)  * Figure 1 * | 1 | F 16 B  25/00 |
| A | | 2 | |
| | --- | | |
| Y | DE-U-7 915 444  (INGRAMATIC)  * Figure 2 * | 1 | |
| A | | 4,5 | |
| | --- | | |
| Y | GB-A-2 070 996  (ILLINOIS TOOL WORKS)  * Figure 2 * | 1 | |
| A | | 4 | TECHNICAL FIELDS SEARCHED (Int. Cl. ³) |
| | --- | | |
| Y | US-A-3 541 918  (JOHNSON)  * Figure 1 * | 1,3 | F 16 B  25/00 |
| A | | 5 | |
| | --- | | |
| Y | US-A-3 861 269  (LAVERTY)  * Figure 1 * | 1,3 | |
| | --- | | |
| A | DE-A-2 415 619  (LITTON INDUSTRIES) | | |
| | ---              -/- | | |

The present search report has been drawn up for all claims

| Place of search | Date of completion of the search | Examiner |
|---|---|---|
| BERLIN | 30-05-1984 | ZAPP E |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | DE-A-2 461 536   (ROCKFORD HEADED PRODUCTS) | | |
| A | DE-A-2 732 695   (YAMASHINA SEIKOSHO) <br> * Figure 1 *  & US-A-4 241 638 (Cat. D)  & US-A-4 329 099 (Cat. D) | 1,2 | |
| D,A | US-A-4 027 573   (LAVERTY) <br> * Figure 1 * | 1,3 | |
| D,A | US-A-4 323 326   (OKADA et al.) <br> * Figure 1A * | 1 | |

TECHNICAL FIELDS
SEARCHED (Int. Cl. ³)

The present search report has been drawn up for all claims

| Place of search <br> BERLIN | Date of completion of the search <br> 30-05-1984 | Examiner <br> ZAPP E |
|---|---|---|